# DEMANDE DE BREVET EUROPEEN

(11) **EP 1 367 308 A1**
(43) Date de publication de la demande: **03.12.2003**
(21) Numéro de dépôt: 03290465.8
(22) Date de dépôt: 27.02.2003
(51) Int. Cl.: F16L 3/24

(54) **Dispositif de fixation d'objets allongés sur un support plat**

(30) Priorité: 23.05.2002 FR 0206269
(71) Demandeur: AIRBUS FRANCE, 31060 Toulouse (FR)
(72) Inventeur: Labeirie, Jean-Luc, 31770 Colomiers (FR); Blin, Mickael, 31700 Blagnac (FR); Vandries, Jean-Paul, 82370 Labastide Saint Pierre (FR)
(74) Mandataire: Bonnetat, Christian

(57) **Abrégé**

- Dispositif de fixation d'objets allongés sur un support plat.
- Selon l'invention, le dispositif comporte deux pièces d'extrémité (7, 8), qui présentent chacune une face d'appui (10) pour reposer sur ledit support plat (3) et qui sont assemblables l'une à l'autre par une liaison coulissante à positions marquées (9, 13, 14). Le berceau dudit dispositif pour recevoir les objets allongés (2) transversalement audit support plat (3) est constitué par deux demi-berceaux (11) respectivement portés par les deux pièces (7, 8). Ces dernières comportent des moyens d'accrochage (12) sur les bords latéraux (5, 6) du support plat (3).

## Description

La présente invention concerne un dispositif de fixation d'objets allongés, tels que tubes, gaines, câbles, etc... sur un support plat, tel qu'une aile de profilé, délimité par deux bords latéraux au moins approximativement parallèles, ledit dispositif comportant un berceau pour recevoir lesdits objets allongés transversalement auxdits bords latéraux et des moyens de fixation, tels qu'un collier, pour fixer lesdits objets allongés dans ledit berceau.

On sait que, dans les aéronefs, les différents câbles électriques prévus à bord sont fixés à des poutres ou à des cadres du fuselage par des dispositifs de fixation du genre rappelé ci-dessus. On sait de plus que, actuellement, les avions de transport civil deviennent de plus en plus gros, de sorte que leurs poutres et leurs cadres sont de plus en plus larges. Il n'est donc plus possible d'utiliser pour les gros avions de transport civil modernes, les dispositifs de fixation actuellement en usage dans les avions de transport civil précédents. En effet, d'une part, ces dispositifs de fixation ne sont pas adaptés à être fixés sur de larges poutres ou cadres, et, d'autre part, les berceaux de ces dispositifs de fixation actuellement utilisés ne sont pas assez larges pour éviter auxdits câbles de frotter contre les larges poutres ou cadres, ce qui entraîne des défauts d'isolation électrique par usure des gaines de ces câbles et donc des perturbations du fonctionnement des circuits électriques reliés auxdits câbles.

L'objet de la présente invention est de remédier à ces inconvénients.

A cette fin, selon l'invention, le dispositif de fixation d'objets allongés sur un support plat délimité par deux bords latéraux au moins approximativement parallèles, ledit dispositif comportant deux pièces d'extrémité qui sont assemblables l'une à l'autre par une liaison coulissante à positions marquées et dont chacune d'elles comporte des moyens d'accrochage sur l'un desdits bords latéraux, est remarquable en ce que :
- chacune des deux pièces d'extrémité présente une face d'appui, qui est apte à reposer sur ledit support plat et qui porte, du côté opposé auxdits moyens d'accrochage, une portion de berceau ; et
- les deux portions de berceau forment un berceau pour recevoir lesdits objets allongés transversalement auxdits bords latéraux.

Ainsi, grâce à la présente invention, le dispositif de fixation peut s'adapter, de façon réglable, à de larges supports plats. De plus, ledit berceau étant constitué de deux demi-berceaux écartés l'un de l'autre et disposés au voisinage desdits bords latéraux des supports plats, on élimine pratiquement le risque que les câbles puissent frotter contre ces supports plats.

On remarquera que le document US-6 012 691 décrit un dispositif de fixation d'objets allongés comportant deux pièces d'extrémité assemblables l'une à l'autre par une liaison coulissante à positions marquées, chacune d'elles comportant des moyens d'accrochage sur l'un des bords latéraux d'un support plat. Cependant, le dispositif de ce document antérieur est destiné à la fixation d'objets allongés longitudinalement (et non pas transversalement) sur le support plat et il ne peut résoudre le problème de l'invention. De plus, dans ce document antérieur, les deux pièces d'extrémité ne peuvent comporter une face d'appui contre le support plat, car elles sont écartées de celui-ci par une pièce de liaison.

Dans le dispositif de fixation de l'invention, afin d'éliminer totalement le risque de frottement des câbles contre les supports plats, on peut mettre de plus en oeuvre les particularités suivantes :
- ledit dispositif de fixation conforme à la présente invention comporte une pièce plate intermédiaire, disposée entre lesdites pièces d'extrémité, reposant sur ledit support plat et faisant partie de ladite liaison coulissante à positions marquées ; et/ou
- au moins l'une desdites pièces d'extrémité présente un prolongement plat s'étendant au-dessus dudit support plat ou au-dessus de ladite pièce intermédiaire, en direction de l'autre pièce d'extrémité.

De plus, pour assurer une bonne isolation électrique entre lesdits câbles et ledit support plat, il est avantageux que les différentes pièces dudit dispositif de fixation soient réalisées en une matière synthétique électriquement isolante.

De préférence, ladite liaison coulissante à positions marquées est du type à crémaillère(s) et ergot(s) élastique(s) coopérants. Dans ce cas, il est avantageux que ladite matière synthétique électriquement isolante soit suffisamment élastique pour qu'on puisse réaliser lesdits ergots élastiques en cette matière.

Avantageusement, le dispositif de fixation conforme à la présente invention comporte des moyens de positionnement sur ledit support plat. De tels moyens de positionnement peuvent comporter au moins un ergot porté par ledit dispositif et apte à pénétrer dans un orifice rigidement lié audit support plat, c'est-à-dire pratiqué directement dans celui-ci ou dans un élément rigidement lié audit support plat.

Les figures du dessin annexé feront bien comprendre comment l'invention peut être réalisée. Sur ces figures, des références identiques désignent des éléments semblables.

La figure 1 est une vue en perspective du dessus illustrant un premier mode de réalisation du dispositif conforme à la présente invention, fixant des objets allongés sur un support plat.

La figure 2 est une vue en perspective du dessus du dispositif de la figure 1, en vue éclatée.

La figure 3 est une vue en perspective du dessous du dispositif des figures 1 et 2, en vue éclatée.

La figure 4 est une vue en perspective du dessus partielle illustrant un deuxième mode de réalisation du dispositif conforme à la présente invention, monté sur un large support plat.

La figure 5 est une vue en perspective du dessous partielle du dispositif de la figure 4, le large support plat étant éliminé.

La figure 6 est une vue en perspective du dessus partielle du dispositif des figures 4 et 5, monté sur un support plat étroit.

La figure 7 est une vue en perspective du dessous partielle du dispositif de la figure 6, le support plat étroit étant éliminé.

La figure 8 est une vue en perspective du dessus partielle illustrant un troisième mode de réalisation du dispositif conforme à la présente invention, monté sur un support plat pourvu d'une âme orthogonale.

La figure 9 est une vue en perspective du dessus partielle du dispositif de la figure 8, en vue éclatée, le support plat étant éliminé.

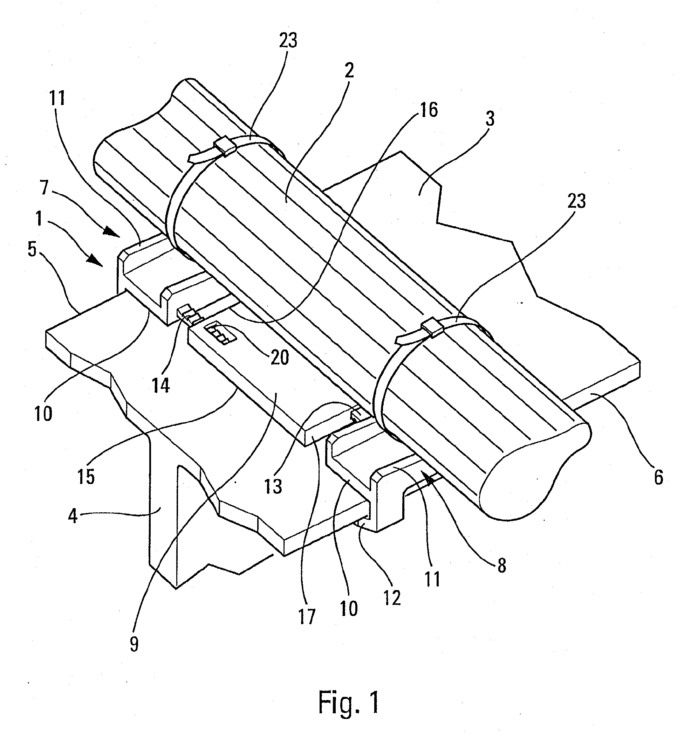

Le dispositif de fixation 1, conforme à la présente invention et montré sur les figures 1 à 3, est destiné à fixer des objets allongés 2 (tubes, gaines, câbles, etc...) sur un support plat 3. Ce support plat 3, qui est par exemple une aile d'un profilé présentant une âme 4, est délimité par deux bords latéraux 5 et 6 au moins approximativement parallèles.

Le dispositif de fixation 1 comporte deux pièces d'extrémité identiques 7 et 8 et une pièce intermédiaire 9, par exemple réalisées en une matière synthétique relativement élastique et électriquement isolante.

Chacune desdites pièces d'extrémité identiques 7, 8 comporte :
- une face d'appui 10 apte à reposer sur le support plat 3 ;
- une portion de berceau 11, disposée au-dessus de ladite face d'appui 10 et apte à recevoir lesdits objets allongés 2 transversalement auxdits bords latéraux 5, 6 ;
- des crochets 12, aptes à s'accrocher derrière l'un ou l'autre des bords latéraux 5, 6 et disposés au-dessous de ladite face d'appui 10 ; et
- des crémaillères saillantes 13, 14, disposées au-dessus de ladite face d'appui 10 et du côté opposé desdits crochets 12.

Quant à elle, la pièce intermédiaire 9, qui présente par exemple la forme d'une plaque, comporte une face d'appui 15 apte à reposer sur ledit support plat 3 et des bords opposés parallèles 16 et 17, symétriques l'un de l'autre par rapport au centre de ladite plaque. Dans l'épaisseur de la pièce intermédiaire 9 sont prévus des logements pour les crémaillères 13, 14 des pièces d'extrémité 7, 8, lesdits logements (non visibles) débouchant dans lesdits bords 16, 17 par des ouvertures 18, 19. A l'entrée desdits logements, c'est-à-dire au voisinage des ouvertures 18, 19, la pièce intermédiaire 9 présente des ergots élastiques 20, formés dans celle-ci, et aptes à coopérer avec les dents des crémaillères 13, 14 pour en marquer la position dans lesdits logements.

De plus, dans sa face d'appui 15, la pièce intermédiaire 9 comporte un doigt de positionnement 21, apte à pénétrer dans un trou 22 pratiqué dans le support plat 3.

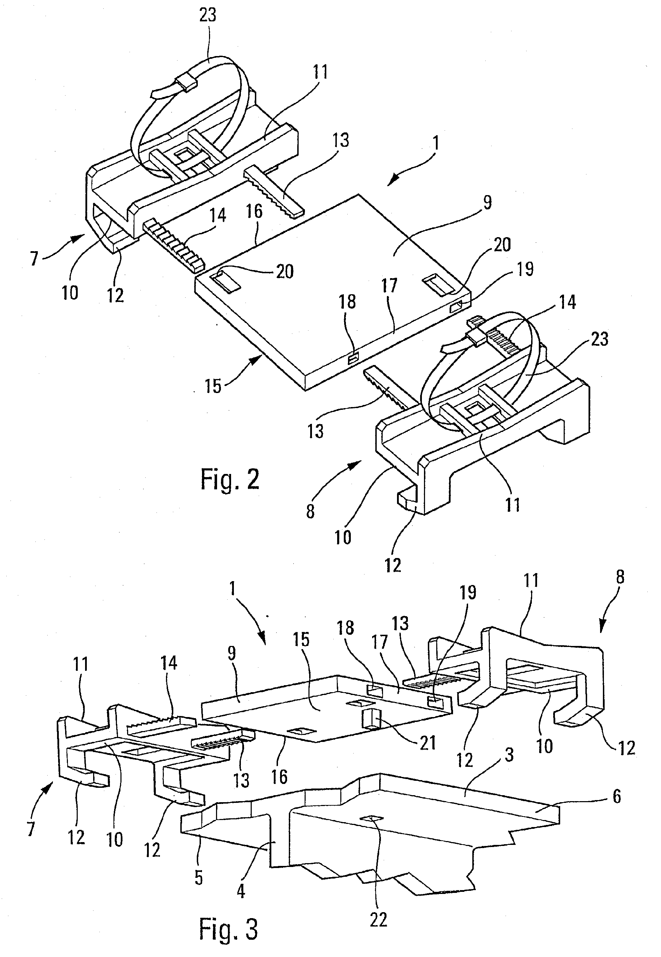

Par ailleurs, le dispositif de fixation 1 comporte des colliers 23 (non représentés sur la figure 3), liés aux portions de berceau 11 et aptes à fixer les objets allongés 2 sur ces dernières.

De la description qui vient d'être faite, on comprend aisément que, la pièce intermédiaire 9 étant disposée sur le support plat 3 de façon que sa face d'appui 15 repose sur ce dernier et que son doigt de centrage 21 soit en place dans le trou 22, il est possible d'assembler les deux pièces d'extrémité 7, 8 à ladite pièce intermédiaire 9 en introduisant leurs crémaillères 13 et 14 dans les orifices 18 et 19, la face d'appui 10 desdites pièces d'extrémité 7, 8 reposant sur ledit support plat. En pressant lesdites pièces d'extrémité 7, 8 en direction de ladite pièce intermédiaire 9, les crans des crémaillères 13, 14 repoussent les ergots élastiques 20, jusqu'à ce que les crochets 12 viennent en appui contre les bords longitudinaux 5 et 6.

Le dispositif 1 est alors fixé au support plat 3, les crans desdites crémaillères 13, 14 empêchant le recul des pièces d'extrémité 7, 8 dans le sens opposé à la pièce intermédiaire 9.

Après fixation du dispositif 1 sur le support plat 3, les objets allongés 2 sont rendus solidaires dudit dispositif 1 par serrage des colliers 23.

On constate ainsi que :
- lesdites pièces d'extrémité 7, 8 sont assemblées l'une à l'autre par la liaison coulissante à positions marquées constituée par les crémaillères 13, 14 et la pièce intermédiaire 9 et permettant l'adaptation du dispositif de fixation 1 au support 3 ;
- les deux portions de berceau 11 des pièces d'extrémité 7, 8 forment pour les éléments allongés 2, un berceau en deux parties disposées au voisinage des bords 5 et 6 ; et
- les objets allongés 2 sont préservés de tout contact avec le support plat 3 par l'interposition, entre ce dernier et lesdits objets allongés 2, des pièces d'extrémité 7 et 8 et de la pièce intermédiaire 9.

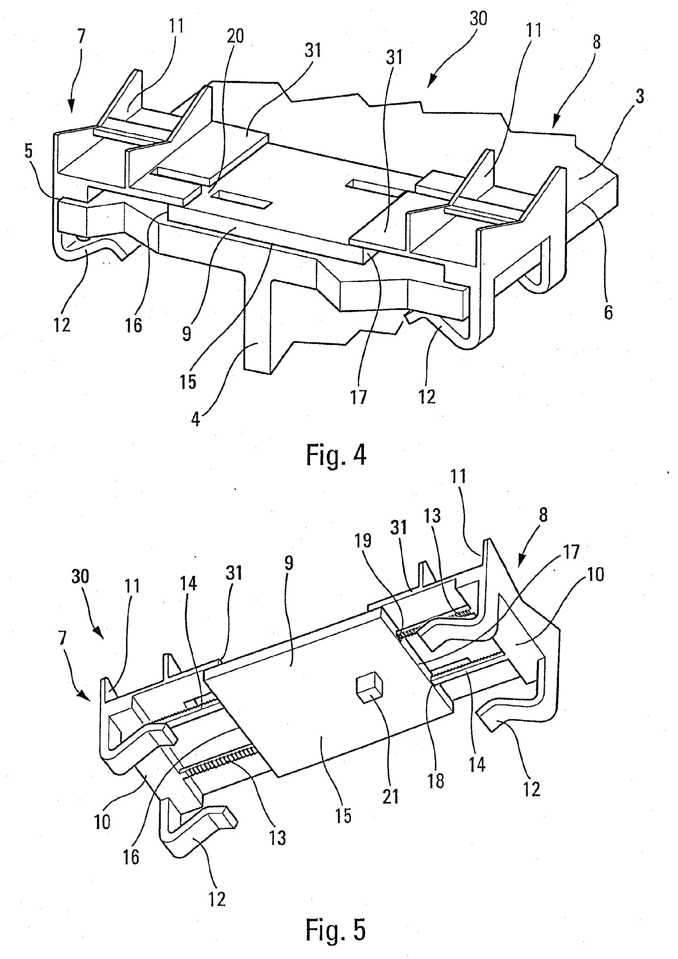

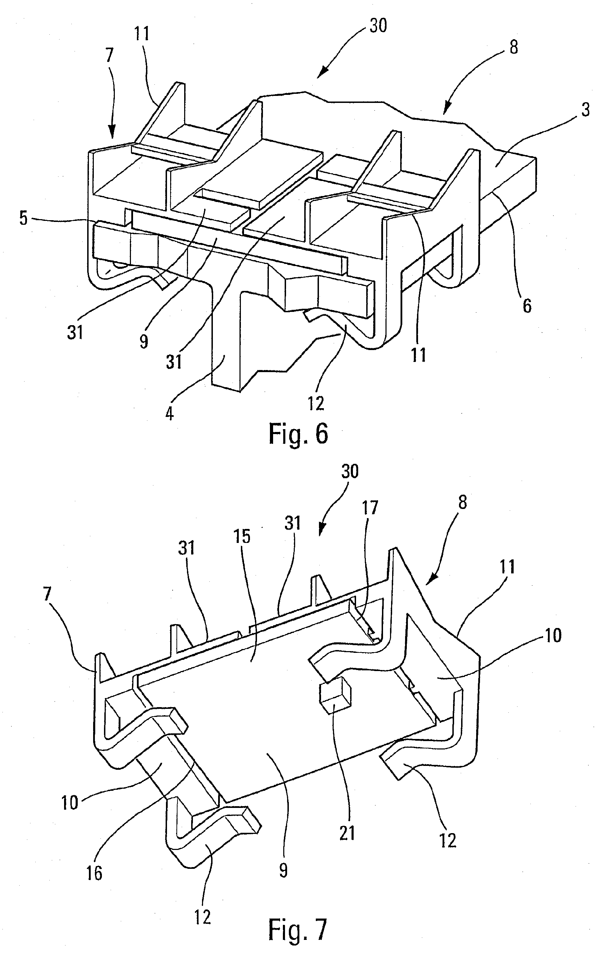

Le mode de réalisation 30 du dispositif de fixation selon l'invention représenté sur les figures 4 à 7 (sur lesquelles les colliers 23 ne sont pas représentés) comporte les éléments 3 à 21 décrits ci-dessus. Cependant, dans ce mode de réalisation, les deux pièces d'extrémité 7 et 8 identiques sont chacune pourvues d'un prolongement plat 31 s'étendant au-dessus de la pièce intermédiaire 9, en direction de l'autre pièce d'extrémité. On renforce ainsi les propriétés d'isolation du dispositif 30, entre le support plat 3 et les objets allongés 2.

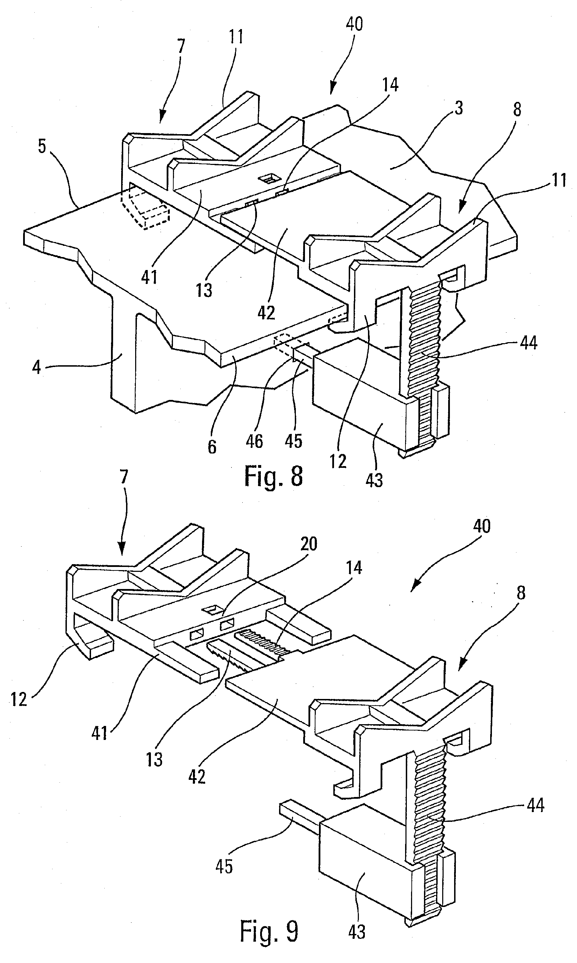

Dans le mode de réalisation 40 du dispositif de fixation conforme à la présente invention et représenté sur les figures 8 et 9, la pièce intermédiaire 9 a été supprimée et remplacée par des prolongements plats 41 et 42, respectivement solidaires des pièces d'extrémité 7 et 8, qui ne sont alors plus identiques. Chacun des prolongements 41 et 42 s'étend au-dessus du support plat 3, en direction de la pièce d'extrémité qui porte l'autre prolongement. De plus, lesdits prolongements 41 et 42 sont conformés pour pouvoir se chevaucher, afin de former une barrière entre le support plat 3 et les objets allongés 2 (non représentés). De plus, dans le dispositif 40, on a prévu un coulisseau 43 pouvant se déplacer, selon des positions marquées, le long d'une crémaillère 44, solidaire de la pièce d'extrémité 8 et orthogonale au prolongement correspondant 42 (et donc au support plat 3). A l'extrémité du coulisseau 43 est prévu un ergot de positionnement 45, apte à pénétrer dans un trou 46 prévu dans l'âme 4 du profilé.

## Revendications

1. Dispositif de fixation d'objets allongés sur un support plat (3) délimité par deux bords latéraux (5, 6) au moins approximativement parallèles, ledit dispositif comportant deux pièces d'extrémité (7, 8) qui sont assemblables l'une à l'autre par une liaison coulissante (13, 14, 20) à positions marquées et dont chacune d'elles comporte des moyens (12) d'accrochage sur l'un desdits bords latéraux (5, 6),
**caractérisé en ce que** :
- chacune des deux pièces d'extrémité (7, 8) présente une face d'appui (10), qui est apte à reposer sur ledit support plat (3) et qui porte, du côté opposé auxdits moyens d'accrochage (12), une portion de berceau (11); et
- les deux portions de berceau (11) forment un berceau pour recevoir lesdits objets allongés (2) transversalement auxdits bords latéraux (5, 6).

2. Dispositif de fixation selon la revendication 1,
**caractérisé en ce qu'**il comporte une pièce plate intermédiaire (9) disposée entre lesdites pièces d'extrémité (7, 8) et faisant partie de ladite liaison coulissante à positions marquées.

3. Dispositif de fixation selon la revendication 2,
**caractérisé en ce qu'**au moins l'une desdites pièces d'extrémité (7, 8) présente un prolongement plat (31) s'étendant au-dessus de ladite pièce intermédiaire (9), en direction de l'autre pièce d'extrémité.

4. Dispositif de fixation selon l'une quelconque des revendications 1 à 3,
**caractérisé en ce que** les deux pièces d'extrémité (7, 8) sont identiques l'une à l'autre.

5. Dispositif de fixation selon la revendication 1,
**caractérisé en ce que** chacune desdites pièces d'extrémité (7, 8) comporte un prolongement plat (41, 42) s'étendant au-dessus dudit support plat (3), en direction de l'autre pièce d'extrémité, et **en ce que** lesdits prolongements plats (41, 42) sont aptes à se chevaucher.

6. Dispositif de fixation selon l'une quelconque des revendications 1 à 5,
**caractérisé en ce qu'**il est réalisé en une matière synthétique électriquement isolante.

7. Dispositif de fixation selon l'une quelconque des revendications 1 à 6,
**caractérisé en ce que** ladite liaison coulissante à positions marquées est du type à crémaillère (13, 14) et ergot élastique (20) coopérants.

8. Dispositif de fixation selon les revendications 6 et 7,
**caractérisé en ce que** ladite matière synthétique est élastique et **en ce que** ledit ergot élastique est réalisé en cette matière.

9. Dispositif de fixation selon l'une des revendications 1 à 8,
**caractérisé en ce qu'**il comporte des moyens (21, 45) de positionnement sur ledit support plat.

10. Dispositif de fixation selon la revendication 9,
**caractérisé en ce que** lesdits moyens de positionnement comportent au moins un ergot (21, 45) porté par ledit dispositif et apte à pénétrer dans un orifice (22, 46) rigidement lié audit support plat.
